# EUROPEAN PATENT APPLICATION

(11) **EP 4 671 592 A1**
(43) Date of publication of application: **31.12.2025**
(21) Application number: 24184729.2
(22) Date of filing: 26.06.2024
(51) Int. Cl.: F16L 59/13, H01B 12/12, H01B 12/14

(54) **INSULATED TUBE SYSTEM**

(71) Applicant: NKT Cables Group A/S, 2605 Brøndby (DK)
(72) Inventor: PITZER, Martin, Bonn (DE); THIDEMANN HANSEN, Carsten, Jaegerspris (DK); WILLÉN, Dag, Klagshamn (SE)
(74) Representative: Kransell & Wennborg KB

(57) **Abstract**

Insulated tube system (1), comprising an inner tube (10) and an outer tube (20), each one comprising a corrugated wall having ridges and valleys arranged one after the other in the axial direction, and wherein the outer tube (20) is arranged around and at a distance from the inner tube (10) whereby a gap (G) is formed, a thermally insulating layer (40) arranged in the gap (G) and comprising a plurality of radial through-openings (41), and a plurality of radially flexible spacers (30), each spacer (30) arranged in a through-opening (41) and comprising a top portion (32) configured to contact the outer tube (20) and having an axial extension being at least equal to the pitch of the corrugation of the outer tube (20), each spacer (30) being configured to be compressed radially in response to a force exerted on the spacer (30) by the outer tube (20).

## Description

### TECHNICAL FIELD

The present disclosure relates to the field of insulated tubes and in particular to an insulated tube system and a superconducting power cable comprising such system.

### BACKGROUND

To maintain a superconducting power cable in a superconducting state, the cable needs to be constantly cooled. Hence, the superconducting cable is placed in an insulated tube system arranged as a cryostat.

The insulated tube system generally comprises an inner tube, an outer tube, and a thermally insulating layer arranged between the inner and outer tube. However, the inner tube, outer tube, and thermally insulating layer may move relative to each other. Such movement may risk damaging the thermally insulating layer.

In insulated tube systems, spacers may be used to keep the distance between the inner and outer tube. However, such spacers may risk tearing or compressing the thermally insulating layer and may thus compromise the insulating properties of the thermally insulating layer.

It is therefore an object of the present disclosure to provide an improved insulated tube system and superconducting cable comprising such an insulated tube system arranged as a cryostat.

### SUMMARY

One objective is to make available an improved insulated tube system.

Yet another objective is to make available an insulated tube system which is robust against relative movement between its constituent parts.

Yet another objective is to make available an insulated tube system comprising an improved spacer.

A further objective is to make available a superconducting cable comprising said improved insulated tube system arranged as a cryostat.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

According to a first aspect of the disclosure, there is provided an insulated tube system comprising an inner tube and an outer tube, each of the inner and outer tube comprising a corrugated wall having ridges and valleys arranged one after the other in the axial direction of the inner and outer tubes, and wherein the outer tube is arranged around and at a distance from the inner tube whereby a gap is formed between the inner tube and the outer tube; a thermally insulating layer arranged in the gap, the thermally insulating layer comprising a plurality of radial through-openings, each extending through the thermally insulating layer in a radial direction in the gap; and a plurality of radially flexible spacers, each spacer being arranged between the inner tube and the outer tube, each spacer comprising a top portion configured to contact the outer tube, the top portion having an axial extension along the axial direction of the inner and outer tubes, the axial extension being at least equal to the pitch of the corrugation of the outer tube, each spacer being configured to be compressed radially in response to a force exerted on the spacer by the outer tube, wherein each spacer is arranged in a through-opening in the thermally insulating layer.

By providing radially compressible, or flexible, spacers, the spacers may achieve a stronger and more resilient configuration of the insulated tube system in situations where a high load is exerted on the insulated tube system, and in particular on the outer tube, such as during installation or at locations along the insulated tube system where bending occurs.

Corrugated tubes allow some bending of the insulated tube system. However, when a spacer is placed between a corrugated inner tube and a corrugated outer tube, the spacer may get stuck in the ridges and valleys of the corrugations. This may risk damage the spacer in the case of any relative axial movement between the inner tube and the outer tube. Thus, by having each spacer comprising a top portion having an axial extension being at least equal to the pitch of the corrugation of the outer tube, the top portion can slide along the ridges of the corrugation of the outer tube. Thus, the spacer may more easily move in the axial direction relative to the outer tube in the case of any relative axial movement between the inner tube and the outer tube. It should be understood that the pitch is defined as the axial distance between two adjacent ridges or between two adjacent valleys of the corrugated inner or outer tube. Thus, the insulated tube system extends in a longitudinal direction along an axial axis, and the pitch is defined in the axial direction.

By having each spacer arranged in a through-opening in the thermally insulating layer, the spacers may be embedded in the thermally insulating layer. Hereby, the problem of the spacers tearing or compressing the thermally insulating layer is mitigated.

According to one embodiment, each spacer has a bottom portion that bears against two adjacent ridges of the inner tube, and wherein the bottom portion further comprises a protrusion arranged to engage with a valley between the two ridges.

By having a protrusion arranged to engage with a valley between the two ridges of the inner tube, the spacer is restrained from axial movement relative to the inner tube. For example, the protrusion extends radially into a valley between two adjacent ridges

According to one embodiment, the spacer has a resilient structure, wherein the bottom portion and the top portion are connected by means of the resilient structure.

Thus, each spacer may be configured to be compressed radially in response to a force exerted on the spacer by the outer tube owing to the resilient structure. The resilient structure is thus configured to be resilient in the radial direction of the insulated tube system. For example, the resilient structure connects the bottom portion with the top portion, or extends from the bottom portion to the top portion. In response to a force exerted on the spacer by the outer tube, the resilient structure may be brought from a non-compressed state to a compressed state, wherein for the compressed state, the bottom portion is arranged closer to the top portion in the radial direction as compared to in the non-compressed state.

According to one embodiment, resilient structure comprises a spacer through-opening between the top portion and the bottom portion in the circumferential direction of the inner tube.

The spacer through-opening may thus provide, or contribute to, the resiliency of the resilient structure. For example, by the spacer through-opening, the resilient structure may be brought from the previously described non-compressed state to the compressed state.

Thermal energy flow in the spacer due to the temperature difference between inner and outer tube is undesirable since it may compromise the thermally insulating properties of the insulated tube system. The rate of thermal energy flow in the spacer is dictated by the thermal conductance which is proportional to the area of the spacer perpendicular to the temperature gradient. A spacer comprising a spacer through-opening has an area perpendicular to the temperature gradient which is smaller as compared to a spacer without a spacer through-opening, whereby a lower transfer of thermal energy flow through the spacer is achieved.

According to one embodiment, the spacer through-opening has an inner surface provided with a curved structure extending radially inwards or outwards and a counter surface arranged to cooperate with the curved surface in response to radial compression of the spacer.

In other words, the spacer through-opening is at least partly defined by, or is at least partly delimited by, the inner surface of the resilient structure, and is at least partly defined by, or is at least partly delimited by the counter surface of the resilient structure. Thus, the inner surface with the curved structure and the counter surface are arranged opposite each other with the spacer through-opening arranged therebetween. For example, the top portion of the resilient structure comprises an outer surface facing the corrugated wall of the outer tube, and said inner surface with the curved structure being arranged opposite the outer surface of the top portion. Correspondingly, the bottom portion of the resilient structure comprises an outer surface facing the corrugated wall of the inner tube, and said counter surface being arranged opposite the outer surface of the bottom portion.

In a first stage of cooperation between the curved surface and the counter surface, for example in response to a force exerted on the spacer by the outer tube, the curved surface is brought into contact with the counter surface at a tangential point at the curved surface. As the spacer is further radially compressed, the contact between the curved surface and the counter surface is increased and the area of cooperation between the curved surface and the counter surface is increased. Consequently, by the above features, the spacer achieves a longer path of gradually increased mechanical resistance and only gradually increased thermal conductivity during radial compression, as compared to having a flat surface of the inner surface.

According to one embodiment, each spacer has a width in the circumferential direction of the inner tube, wherein the bottom portion is the widest portion of the spacer.

By having the bottom portion being the widest portion of the spacer, the stability of the spacer is increased as it bears against at least two adjacent ridges of the inner tube.

According to one embodiment, the height of the spacer is essentially the size of the gap. For example, the height of the spacer is the same as the size of the gap. The spacer may thus extend along the entire, or essentially the whole, gap.

According to one embodiment, the thermally insulating layer comprises a plurality of sub-layers in the radial direction of the insulated tube system, wherein each sub-layer comprises a plurality of axial sub-layer sections of axial length L arranged axially one after the other. Hereby, the properties of the thermally insulating layer can be better controlled during assembly and/or the arrangement of the spacers in the through-openings in the thermally insulating layer improved.

According to one embodiment, the axial length L corresponds to the entire length of the insulated tube system.

By having the axial length L of the plurality of axial sub-layer sections correspond to the entire length of the insulated tube system, the thermally insulating layer may be more easily arranged around the inner tube.

According to one embodiment, axial sub-layer sections of two adjacent sub-layers are axially offset relative to each other.

When arranging the sub-layers of the thermally insulating layer, it is desirable to avoid radial gaps between the sub-layers from which thermal energy may escape. Such gaps are especially prone to form at the axial ends of the sub-layers. By arranging the axial sub-layer sections of two adjacent sub-layers axially offset relative to each other, such gaps can be avoided.

According to one embodiment, some of the through-openings are provided at the axial ends of the axial sub-layer sections as end section through-openings, and some of the through-openings are arranged between the two axial ends as internal through-openings, wherein for each sub-layer, end section through-openings are axially aligned with internal through-openings of an adjacent sub-layer.

By these features, the through-openings of the thermally insulating layer may be aligned while maintaining the relative offset between the adjacent sub-layers. Moreover, the fixation of the sub-layers and the spacers may be improved.

According to one embodiment, the internal through-openings of an axial sub-layer section of length L are arranged at a length L/2 from the axial ends of the axial sub-layer section. Such positioning of the internal through-openings further reduces the formation of the radial gaps.

According to one embodiment, the thermally insulating layer is formed of at least two sheets in the radial direction of the insulated tube system, wherein each sheet is being helically wound around the inner tube. Hereby, an efficient structure for arranging the thermally insulating layer around the inner tube is provided. For example, the thermally insulating layer may fully cover the inner tube.

According to one embodiment, two adjacent sheets are wound axially offset relative to each other. Hereby, it is ensured that the thermally insulating layer fully covers the inner tube.

According to one embodiment, the dimensions of the through-openings correspond to the width and length of a spacer.

For example, the dimensions of the through-openings may correspond to the width and length of a spacer such that the spacer abuts the thermally insulating layer. Alternatively, the dimensions of the through-openings may correspond to the width and length of a spacer such that the spacer is embedded in the thermally insulating layer without abutting the thermally insulating layer, in which case there may be a space between the spacer and thermally insulating layer.

According to one embodiment, at an axial position of a through-opening, the thermally insulating layer comprises three, four, five or six through-openings in the circumferential direction. That is, in a cross section traverse the longitudinal direction of the insulated tube system, the thermally insulating layer may comprise three, four, five or six through-openings.

According to one embodiment, the through-openings are distributed evenly in the circumferential direction.

According to one embodiment, the insulated tube system comprises fixation straps, wherein all the spacers in the same transverse plane of the insulated tube system are fixed to the inner tube by a single fixation strap arranged around the inner tube.

According to one embodiment, the insulated tube system comprises a meshed ribbon joined with the bottom portion of the spacers, the ribbon being arranged around the inner tube to fix the spacers to the inner tube.

According to a second aspect, there is provided a superconducting power cable comprising an insulated tube system of the first aspect arranged as a cryostat. Effects and features of the second aspect of the invention are largely analogous to those described above in connection with the first aspect of the invention. Embodiments mentioned in relation to the first aspect of the invention are largely compatible with the second aspect of the invention.

### BRIEF DESCRIPTION OF THE DRAWINGS

Aspects and embodiments are now described, by way of example, with reference to the accompanying drawings, in which:
Figure 1 schematically shows a cross section of an example of an insulated tube system;
Figures 2a and 2b schematically show a two-view drawing of an example of a spacer;
Figures 3a and 3b schematically show a two-view drawing of another example of a spacer;
Figure 4a schematically shows an example of the thermally insulating layer;
Figure 4b schematically shows a second example of the thermally insulating layer; and
Figure 5 schematically shows a perspective view of a superconducting power cable comprising an insulated tube system arranged as a cryostat.

### DETAILED DESCRIPTION

The aspects of the present disclosure will now be described more fully hereinafter with reference to the accompanying drawings, in which certain embodiments of the invention are shown.

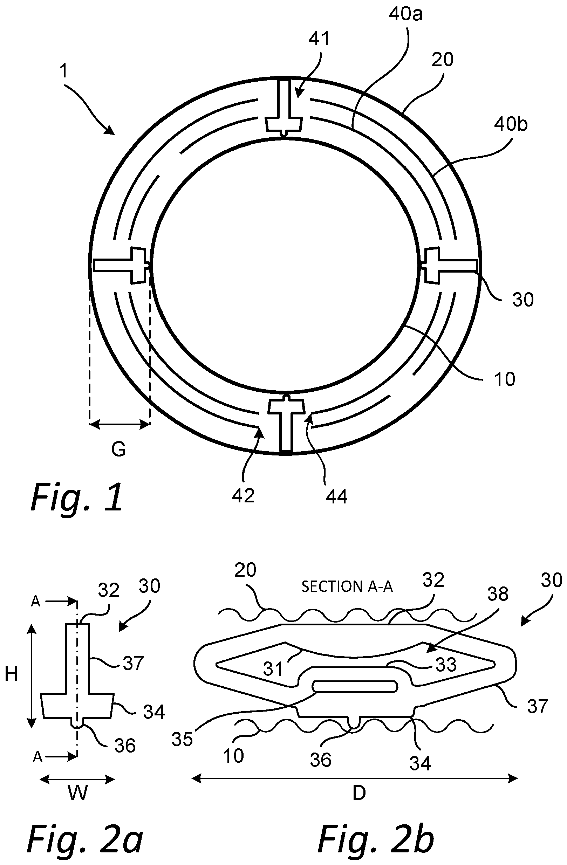

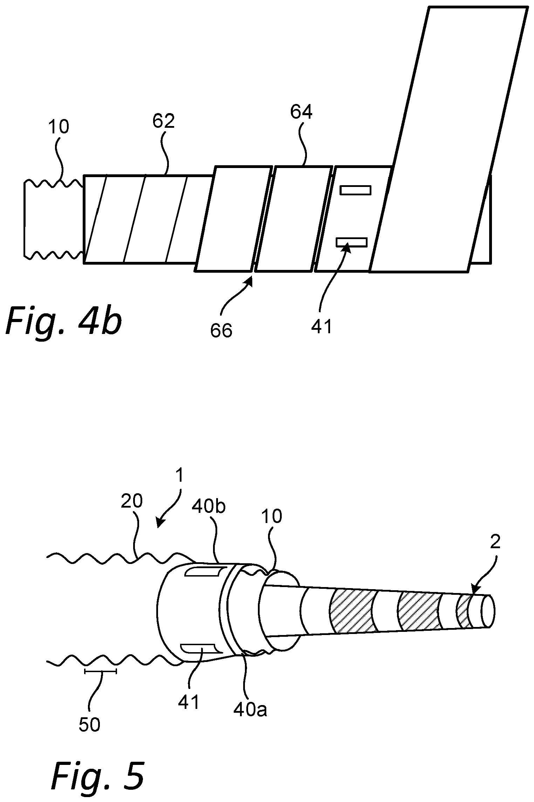

Fig. 1 shows a cross section of an example of an insulated tube system 1. The insulated tube system 1 extends in a longitudinal direction along a longitudinal, or axial, axis (extending into the paper of Fig. 1), also referred to as an axial direction. Thus, the cross section of the insulated tube system 1 in Fig. 1 is corresponding to a plane perpendicular to such axial axis. The insulated tube system 1 comprises an inner tube 10 and an outer tube 20, wherein the outer tube 20 is arranged around and at a distance from the inner tube 10 whereby a gap G is formed between the inner tube 10 and the outer tube 20. With further reference to fig. 5, each one of the inner tube 10 and the outer tube 20 comprises a corrugated wall having ridges and valleys arranged one after the other in the axial direction of the inner 10 and outer 20 tubes. In one example, the ridges and valleys may be arranged one after the other helically around the inner and outer tube. The corrugated wall has a pitch 50 defined as the axial distance between two adjacent ridges or between two adjacent valleys of the corrugated inner or outer tube. The inner 10 and outer 20 tubes may be metal tubes.

Referring back to fig. 1, the insulated tube system 1 comprises a thermally insulating layer 40 arranged in the gap G. The thermally insulating layer 40 may comprise a plurality of sub-layers 40a, 40b in the radial direction of the insulated tube system 40. Thus, one of the sub-layers, here being a first sub-layer 40a, may be arranged radially inside of another sub-layer 40b, here being a second sub-layer 40b. Each sub-layer 40a, 40b maybe wrapped around the inner tube 10. For simplicity, the thermally insulating layer 40 of fig. 1 is shown with two sub-layers 40a, 40b, but may comprise any number of sub-layers and may in reality be wrapped with a relatively large number of sub-layers 40a, 40b. Typically, the thermally insulating layer 40 comprises at least two sub-layers 40a, 40b, as shown in fig. 1.

The thermally insulating layer 40 comprises a plurality of radial through-openings 41. Each through-opening 41 extends through the thermally insulating layer 40 in a radial direction in the gap G. The thermally insulating layer 40 may be made of thin metallized plastic film of for instance teflon, polypropylene, polyamide or polyethylene terephthalate (PET) in combination with thin fibre network for instance made of fibre glass, polymers, carbon fibre or kevlar fibre.

The insulated tube system 1 comprises a plurality of radially flexible spacers 30, 130. Each spacer 30, 130 is arranged in a respective through-opening 41 in the thermally insulating layer 40, whereby each spacer 30, 130 is arranged in the gap G between the inner tube 10 and the outer tube 20. Each spacer 30, 130 is configured to be compressed radially in response to a force exerted on the spacer 30, 130 by the outer tube 20, typically a force in the radial direction.

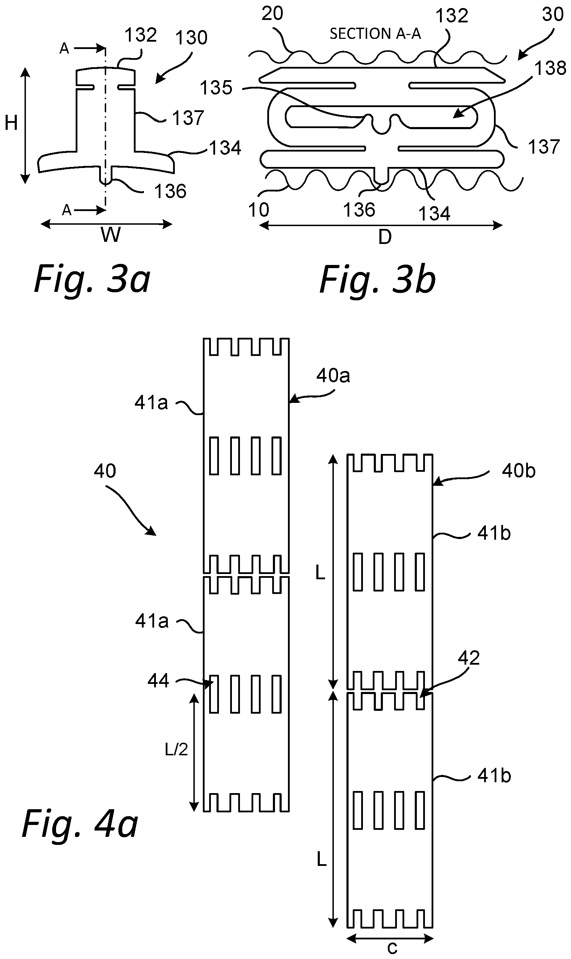

With additional reference to figs. 2 and 3 showing two exemplary embodiments of a spacer 30, 130. Each spacer 30, 130 may have a height H in the radial direction of the inner tube 10, a width W in the circumferential direction of the inner tube 10, and a length D in the axial direction of the inner tube 10, as seen in figs. 2a-2b and 3a-3b. The length D of the spacer 30, 130 may in one embodiment be 2 to 4 times the height H of the spacer 30, 130. The width W of the spacer 30, 130 may in one embodiment be 0.3 to 2 times the height H of the spacer 30, 130.

The height H of the spacer 30, 130 may essentially be of the same size as the gap G. The dimensions of the through-openings 41 may correspond to the width W and length D of a respective spacer 30, 130 such that the spacer 30, 130 may be embedded in the thermally insulating layer 40. The spacer 30, 130 may be embedded in the thermally insulating layer 40 such that it abuts the thermally insulating layer 40, or alternatively, the spacer 30, 130 may be embedded in the thermally insulating layer 40 without abutting the thermally insulating layer 40, in which case there may be a space between the spacer 30, 130 and thermally insulating layer 40 when the spacer 30, 130 is arranged in the through-openings 41.

The through-openings 41 may be arranged in the thermally insulating layer 40 in a variety of ways. In one example, the thermally insulating layer 40 may, for example, comprise three, four, five or six evenly distributed through-openings 41 in the circumferential direction, and at an axial position of a through-opening 41. In another example, the through-openings 41 may be helically distributed across the inner tube 10.

Furthermore, figs. 2b and 3b show said spacers 30, 130 arranged between the corrugated inner tube 10 and corrugated outer tube 20. Each spacer 30, 130 comprises a top portion 32, 132 configured to contact the outer tube 20. The top portion 32, 132 has an axial extension along the axial direction of the inner 10 and outer 20 tubes, the axial extension being at least equal to the pitch 50 of the corrugation of the outer tube 20. In one embodiment, the axial extension of the top portion 32, 132 may be a between 2 and 6 times the pitch 50 of the corrugation of the outer tube 20. The top portion 32, 132 may thereby be configured to contact at least two ridges of the corrugated wall. In response to the outer tube 20 being axially displaced relative the inner tube 10, the top portion 32, 132 is configured to slide along the ridges of the corrugated wall.

The force exerted on the outer tube 20 may result in the gap G being smaller or larger than the heigh H of the spacer 30, 130. In the case of the gap G being smaller than the height H, the top portion 32, 132 may mechanically contact the ridges of the outer tube 20. In the case of the gap G being larger than the height H, there may be a separation between the top portion 32, 132 and the outer tube 20.

The spacer 30, 130 may have a bottom portion 34, 134 that bears against two adjacent ridges of the inner tube 10. The bottom portion may further comprise a protrusion 36, 136 arranged to engage with a valley between the two ridges of the inner tube 10. As shown in figs. 2b and 3b, the protrusion 36, 136 extends into the valley between two adjacent ridges. The bottom portion 34, 134 may be the widest portion of the spacer 30, 130. In one embodiment, the bottom portion 34, 134 may be 2-3 times the width of the top portion 32, 132.

The spacer 30, 130 may have a resilient structure 37, 137 connecting the bottom portion 36, 136 and the top portion 32, 132. The resilient structure 37, 137 may comprise a spacer through-opening 38, 138 between the top portion 32, 132 and the bottom portion 34, 134. The spacer through-opening 38, 138 may extend through the spacer 30, 130 in the circumferential direction of the inner tube 10. In one embodiment shown in fig. 2b, the resilient structure 37 may comprise wings or V-shaped portions connecting the top portion 32 and the bottom portion 32. In a further embodiment shown in fig. 3b, the resilient structure 137 may be ovally shaped between the top portion 132 and the bottom portion 132.

In one example, the spacers 30, 130 may be fixed to the inner tube 10 by a fixation strap (not shown) wherein all the spacers 30 in the same transverse plane may be fixed to the inner tube 10 by a single fixation strap arranged around the inner tube. The fixation strap may for example be a wire, a clamp, or a cable tie. In another example, the spacers 30, 130 may be fixed to the inner tube 10 by a meshed ribbon (not shown) joined with the bottom portion 34, 134 of the spacers 30, 130. Such a ribbon may be helically wound in the circumferential direction of the inner tube 10.

In the case of the spacer 30, 130 being fixed to the inner tube 10 by a fixation strap, the spacer 30, 130 may comprise fixation means 35, 135 for attaching the spacer 30, 130 to the fixation strap. In the example where the fixation strap may be a wire, the fixation means 135 may comprise two adjacent horn as shown in fig. 3b. In the example where the fixation strap may be a cable tie, the fixation means 35 may comprise a fixation means through-hole as shown in fig. 2b.

With reference to fig. 2b, the spacer through-opening 38 may be defined by an inner surface provided with a curved structure 31 and a counter surface 33. In the embodiment of fig. 2b the curved structure 31 extends radially inwards, but the curved structure 31 may also extend radially outward. The counter surface 33 may be arranged to cooperate with the curved surface 31 in response to radial compression of the spacer 30.

Fig. 4a shows an example of the first sub-layer 40a and the second sub-layer 40b of the thermally insulating layer 40. The sub-layers 40a, 40b of fig. 4a are flattened for clarity where C denotes the direction which extends in the circumferential direction of the inner tube 10. As seen in figs. 1 and 5, the first sub-layer 40a may be wrapped around the inner tube 10 and the second sub-layer 40b may be wrapped around the first sub-layer 40a.

Each sub-layer 40a, 40b may comprise a plurality of axial sub-layer sections 41a, 41b of axial length L arranged axially one after the other. The axial sub-layer sections 41a, 41b may be provided with end section through-openings 42 at the axial ends of the axial sub-layer sections 41a, 41b and internal through-openings 44 arranged between the two axial ends of the axial sub-layer sections 41a, 41b. In one example, the internal through-openings 44 of an axial sub-layer section 41a, 41b may be arranged at a length L/2 from the axial ends of the axial sub-layer section 41a, 41b.

The axial sub-layer sections 41a, 41b of two radially adjacent sub-layers 40a, 40b are axially offset relative to each other such that for each sub-layer 40a, 40b, the end section through-openings 42 are axially aligned with internal through-openings 44 of an adjacent sub-layer. In the example of fig. 4a, the first sub-layer 40a are axially offset relative to the second sub-layer 40b such that the internal through-openings 44 of the first sub-layer 40a are axially aligned with end section through-openings 42 of the second adjacent sub-layer 40b.

In the example of fig. 4a, the internal though-openings 44 are evenly distributed in the circumferential direction at an axial position of an internal through-opening 44. However, the internal through openings 44 may be arranged in any suitable configuration, such as helically distributed in the circumferential direction.

Fig. 4b shows an embodiment where the thermally insulating layer 40 may be formed of at least two sheets 62, 64 in the radial direction of the insulated tube system 1. Each of the at least two sheets 62, 64 may comprise a wounding seam 66. The wounding seam 66 may comprise a wounding gap between consecutive turns or a wounding overlap between consecutive turns. The wounding gap or wounding overlap may e.g., be at least 2 %, or at least 5 %, or at least 15 %, or at least 25 % of the width of the sheet 62, 64.

Each sheet 62, 64 may be being helically wound around the inner tube 10. A first sheet 62 from the at least two sheets 62, 64 may be wound around the inner tube 10, and a second sheet 64 from the at least two sheets 62, 64 may be wound around the first sheet 62. In one example, two adjacent sheets 62, 64 may be wound axially offset relative to each other. The second sheet 64 may be wound with an axial offset relative to the first sheet 62 whereby a wounding seam 66 of a first sheet 62 does not overlap a wounding seam 66 of a second sheet 64.

The at least two sheets 62, 64 may comprise through-openings 41. In one example, the through-openings 41 may be prefabricated and aligned upon wounding the sheets 62, 64. In one example, the through-openings 41 may be added after wounding the sheets 62, 64.

Fig. 5 shows a superconducting power cable 2 comprising an insulated tube system 1 of any of the preceding aspects and embodiments. The insulated tube system 1 is arranged as a cryostat for the superconducting cable 1.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

## Claims

1. An insulated tube system (1), comprising:
an inner tube (10) and an outer tube (20), each of the inner (10) and outer tube (20) comprising a corrugated wall having ridges and valleys arranged one after the other in the axial direction of the inner (10) and outer (20) tubes, and wherein the outer tube (20) is arranged around and at a distance from the inner tube (10) whereby a gap (G) is formed between the inner tube (10) and the outer tube (20);
a thermally insulating layer (40) arranged in the gap (G), the thermally insulating layer (40) comprising a plurality of radial through-openings (41), each extending through the thermally insulating layer (40) in a radial direction in the gap (G); and
a plurality of radially flexible spacers (30), each spacer (30) being arranged between the inner tube (10) and the outer tube (20), each spacer (30) comprising a top portion (32) configured to contact the outer tube (20), the top portion (32) having an axial extension along the axial direction of the inner (10) and outer tubes (20), the axial extension being at least equal to the pitch of the corrugation of the outer tube (20), each spacer (30) being configured to be compressed radially in response to a force exerted on the spacer (30) by the outer tube (20),
wherein each spacer (30) is arranged in a through-opening (41) in the thermally insulating layer (40).

2. The insulated tube system (1) according to claim 1, wherein each spacer (30) has a bottom portion (34) that bears against two ridges of the inner tube (10), and wherein the bottom portion (34) further comprises a protrusion (36) arranged to engage with a valley between the two ridges.

3. The insulated tube system (1) of any of claims 2, wherein the spacer (30) has a resilient structure (37), wherein the bottom portion (34) and the top portion (32) are connected by means of the resilient structure (37).

4. The insulated tube system (1) according to claim 3, wherein the resilient structure (37) comprises a spacer through-opening (38) between the top portion (32) and the bottom portion (34) in the circumferential direction of the inner tube (10).

5. The insulated tube system (1) according to claim 4, wherein the spacer through-opening (38) is defined by an inner surface provided with a curved structure (31) extending radially inwards or outwards and a counter surface (33) arranged to cooperate with the curved surface in response to radial compression of the spacer (30).

6. The insulated tube system (1) of any of claims 2-5, wherein each spacer (30) has a width (W) in the circumferential direction of the inner tube (10), wherein the bottom portion (34) is the widest portion of the spacer (30).

7. The insulated tube system (1) of any of the preceding claims, wherein the height (H) of the spacer (30) is essentially the size of the gap (G).

8. The insulated tube system (1) of any of claims 1-7, wherein the thermally insulating layer (40) comprises a plurality of sub-layers (40a, 40b) in the radial direction of the insulated tube system (1), wherein each sub-layer (40a, 40b) comprises a plurality of axial sub-layer sections (41a, 41b) of axial length L arranged axially one after the other.

9. The insulated tube system (1) according to claim 8, wherein the axial sub-layer sections (41a, 41b) of two adjacent sub-layers (40a, 40b) are axially offset relative to each other.

10. The insulated tube system (1) according to claim 9, wherein some of the through-openings (41) are provided at the axial ends of the axial sub-layer sections (41a, 41b) as end section through-openings (42), and some of the through-openings are arranged between the two axial ends as internal through-openings (44), wherein for each sub-layer (40a, 40b), end section through-openings (42) are axially aligned with internal through-openings (44) of an adjacent sub-layer (40a, 40b).

11. The insulated tube system (1) according to claim 10, wherein the internal through-openings (44) of an axial sub-layer section (41a, 41b) are arranged at a length L/2 from the axial ends of the axial sub-layer section (41a, 41b).

12. The insulated tube system (1) of any of claims 1-7, wherein the thermally insulating layer (40) is formed of at least two sheets in the radial direction of the insulated tube system (1), wherein each sheet is being helically wound around the inner tube (10).

13. The insulated tube system (1) according to claim 12, wherein two adjacent sheets are wound axially offset relative to each other.

14. The insulated tube system (1) of any of claims 1-13, wherein the dimensions of the through-openings (41) correspond to the width (W) and length of a spacer (30).

15. A superconducting power cable (2) comprising an insulated tube system (1) of any of the preceding claims arranged as a cryostat.
